# EUROPEAN PATENT APPLICATION

(11) **EP 4 628 338 A1**
(43) Date of publication of application: **08.10.2025**
(21) Application number: 23895902.7
(22) Date of filing: 31.05.2023
(51) Int. Cl.: B60K 17/02, B60K 17/12, B60K 23/08, F16H 25/14, F16D 11/14, F16D 23/02, F16D 28/00

(54) **DECOUPLING DEVICE, ELECTRIC DRIVE ASSEMBLY, AND VEHICLE**

(30) Priority: 30.11.2022 CN 202211525575
(71) Applicant: BYD Company Limited, Shenzhen, Guangdong 518118 (CN)
(72) Inventor: ZHAO, Tonghang, Shenzhen, Guangdong 518118 (CN); GUO, Yang, Shenzhen, Guangdong 518118 (CN); TIAN, Shudong, Shenzhen, Guangdong 518118 (CN); CHEN, Xiangzhen, Shenzhen, Guangdong 518118 (CN); LIN, Wenfeng, Shenzhen, Guangdong 518118 (CN)
(74) Representative: Aldridge, Henry Alexander
(86) International application number: PCT/CN2023/097369
(87) International publication number: WO 2024/113736

(57) **Abstract**

A decoupling device (300), which is mounted between a drive motor (100) and a wheel of a vehicle. The decoupling device (300) comprises: a decoupling motor (3), a rotating member (4), and a moving member (5), wherein the rotating member (4) is connected to the decoupling motor (3) and is rotatable under the driving of the decoupling motor (3), the moving member (5) is connected to the rotating member (4), the rotation of the rotating member (4) can drive the moving member (5) to move, and the moving member (5) is provided with a first side and a second side on which the drive motor (100) and the wheel are respectively arranged. The decoupling device (300) is configured to have a decoupling state in which the moving member (5) moves to separate the drive motor (100) from the wheel and a coupling state in which the moving member (5) is combined with the drive motor (100) and the wheel to achieve torque transmission, thereby improving the NVM performance of the vehicle. The present disclosure further relates to an electric drive assembly and a vehicle.

## Description

### CROSS-REFERENCE TO RELATED APPLICATIONS

The present disclosure claims priority to and benefits of Chinese Patent Application No. 2022115255756, filed on November 30, 2022, and entitled "DECOUPLING DEVICE, ELECTRIC DRIVE ASSEMBLY, AND VEHICLE". The entire content of the above-referenced application is incorporated herein by reference.

### FIELD

The present disclosure relates to the field of new energy vehicles, and in particular, to a decoupling device, an electric drive assembly, and a vehicle.

### BACKGROUND

Currently, automotive industry in China is rapidly transitioning from conventional fuel vehicles to new energy vehicles. Some domestic automakers have stopped developing the conventional fuel vehicles, and the new energy vehicles have become mainstream. A power source has developed from a conventional engine to an electric drive system. Consequently, NVH (Noise, Vibration, and Harshness) requirements for the electric drive system are higher in comparison to the conventional fuel vehicles.

In related technologies, when a vehicle is in a coasting condition, a drive motor is forcibly dragged by wheels to rotate in a reverse direction. This generates counter electromotive force and loud noise, severely affecting the NVM performance of the vehicle.

### SUMMARY

The present disclosure aims to resolve at least one of technical problems existing in the related art. Therefore, the present disclosure provides an electric decoupling device. The decoupling device has a decoupling state and a coupling state. When a vehicle is in a coasting condition, the decoupling device is set to the decoupling state, and the decoupling device separates a drive motor from a wheel, so that the drive motor and transmission members such as a differential are not in operation to reduce vibration noise, thereby improving the NVM performance of the vehicle.

Another objective of the present disclosure is to provide an electric drive assembly.

The present disclosure further provides a vehicle.

According to embodiments of the present disclosure, the decoupling device is mounted between the drive motor and the wheel of the vehicle, and includes: a decoupling motor; a rotating member, connected to the decoupling motor and rotatable under driving of the decoupling motor; and a moving member, connected to the rotating member, where rotation of the rotating member drives the moving member to move. The moving member is provided with a first side and a second side on which the drive motor and the wheel are respectively arranged. The decoupling device is configured to have a decoupling state in which the moving member moves to separate the drive motor from the wheel and a coupling state in which the moving member is combined with the drive motor and the wheel to achieve torque transmission.

According to embodiments of the present disclosure, when the decoupling device is in the coupling state, the vehicle travels in a normal traveling condition. When the vehicle is in the coasting condition, the decoupling device is set to the decoupling state, and the decoupling device separates the drive motor from the wheel, so that the drive motor and multiple transmission members are not in operation to reduce vibration noise, thereby improving the NVM performance of the vehicle. In addition, wear of the drive motor and the transmission members can be mitigated, to extend a service life of the electric drive assembly. Energy consumption of wheel rotation during vehicle coasting may be further reduced, counter electromotive force of the drive motor is reduced, an energy-saving effect of the drive motor is improved, and energy consumption of the drive motor is reduced.

In some embodiments, the rotating member is provided with a first end and a second end that are connected. The first end is connected to the decoupling motor, and the second end rotates around the first end under the driving of the decoupling motor. The moving member is provided with a third end and a fourth end that are connected. The third end is connected to the second end of the rotating member, a connection between the third end and the second end is in a folded-line structure, and the fourth end is provided with a first side and a second side on which the drive motor and the wheel are respectively arranged. In the decoupling state, the second end and the third end rotate around the first end to drive the fourth end to move.

Optionally, a rotation axis of the rotating member is parallel to a rotation axis of the decoupling motor, and a moving direction of the moving member is perpendicular to the rotation axis of the decoupling motor.

In some embodiments, the first side of the fourth end of the moving member is fixedly connected to the drive motor, and the second side of the fourth end of the moving member is selectively connected to the wheel. The moving member moves to enable the second side of the fourth end of the moving member to be separated from or fitted to the wheel.

In some embodiments, the decoupling device further includes: a fitting portion. The fitting portion is fixed to the fourth end of the moving member and is provided with a first side surface and a second side surface. The first side surface is configured to enable the first side of the fourth end to be fixedly connected to the drive motor, and the second side surface is configured to enable the second side of the fourth end to be detachably connected to the wheel. The second side surface of the fitting portion is separated from the wheel in the decoupling state, and the second side surface of the fitting portion is combined with the wheel in the coupling state.

Specifically, the fourth end of the moving member includes a fixing claw, the fitting portion includes a main body that is in an interference fit with the fixing claw, and the main body is provided with the first side surface and the second side surface.

In some embodiments, the wheel includes a wheel end half-shaft connected to the wheel, the second side surface of the fitting portion is provided with an inner ring gear, the wheel end half-shaft is provided with a meshing gear fitted to the inner ring gear, the inner ring gear is sleeved on and meshed with the meshing gear in the coupling state, and the inner ring gear is separated from the meshing gear in the decoupling state.

In some embodiments, the drive motor is connected to the decoupling device via a differential, and the differential has a half-shaft gear provided with a first spline. A second spline is provided on the first side surface of the fitting portion. The fitting portion is spline-meshed with the half-shaft gear, so that the fitting portion and the half-shaft gear rotate synchronously.

In some embodiments, the decoupling device further includes a housing having an inner cavity, and a bottom surface of the housing is provided with a fitting groove. The rotating member is arranged in the inner cavity. A part of the moving member extends from the fitting groove into the inner cavity to be connected to the rotating member, so that when the rotating member rotates, the moving member is driven to reciprocate along the fitting groove.

Optionally, the fitting groove is arc-shaped.

According to embodiments of the present disclosure, the electric drive assembly includes the decoupling device according to any one of the foregoing embodiments.

In some embodiments, the electric drive assembly includes: a drive motor; the differential, connected to the drive motor, and including a differential housing and a half-shaft gear, where the drive motor is fitted to the differential housing to drive the differential housing to rotate, the differential housing is fitted to the half-shaft gear to drive the half-shaft gear to rotate, and the half-shaft gear is connected to a wheel end half-shaft; and the decoupling device, arranged between the half-shaft gear and the corresponding wheel end half-shaft, where the wheel end half-shaft is configured to mount the wheel.

According to embodiments of the present disclosure, the vehicle includes the decoupling device according to any one of the foregoing embodiments or the electric drive assembly according to any one of the foregoing embodiments.

According to the vehicle in embodiments of the present disclosure, the foregoing electric drive assembly is provided. When the vehicle is in the coasting condition, the decoupling device separates the half-shaft gear from the wheel end half-shaft, so that the drive motor and the transmission members such as the differential are not in operation to reduce vibration noise, and traveling noise of the vehicle is low, thereby improving traveling experience of the vehicle.

Other aspects and advantages of the present disclosure will be given in the following descriptions, some of which will become apparent from the following descriptions or may be learned from practices of the present disclosure.

### BRIEF DESCRIPTION OF THE DRAWINGS

The foregoing and/or additional aspects and advantages of the present disclosure will become apparent and comprehensible in the descriptions of the embodiments made with reference to the following accompanying drawings.
FIG. 1 is a schematic diagram of a structure of an electric drive assembly according to an embodiment of the present disclosure;
FIG. 2 is a three-dimensional view of an appearance of an electric drive assembly according to an embodiment of the present disclosure;
FIG. 3 is a front view of an electric drive assembly according to an embodiment of the present disclosure;
FIG. 4 is a left view of an electric drive assembly according to an embodiment of the present disclosure;
FIG. 5 is a rear view of an electric drive assembly according to an embodiment of the present disclosure;
FIG. 6 is a right view of an electric drive assembly according to an embodiment of the present disclosure;
FIG. 7 is a bottom view of an electric drive assembly according to an embodiment of the present disclosure;
FIG. 8 is a schematic diagram of a connection between a decoupling device and a wheel end half-shaft according to an embodiment of the present disclosure;
FIG. 9 is a three-dimensional view of an appearance of a decoupling device according to an embodiment of the present disclosure;
FIG. 10 is a front view of a decoupling device according to an embodiment of the present disclosure;
FIG. 11 is a rear view of a decoupling device according to an embodiment of the present disclosure;
FIG. 12 is a left view of a decoupling device according to an embodiment of the present disclosure;
FIG. 13 is a right view of a decoupling device according to an embodiment of the present disclosure;
FIG. 14 is a top view of a decoupling device according to an embodiment of the present disclosure;
FIG. 15 is a bottom view of a decoupling device according to an embodiment of the present disclosure;
FIG. 16 is a schematic diagram of a structure of a decoupling device according to an embodiment of the present disclosure;
FIG. 17 is a schematic diagram of movement of a decoupling device according to an embodiment of the present disclosure;
FIG. 18 is a schematic diagram of a structure of a gear of a reducer according to an embodiment of the present disclosure;
FIG. 19 is a comparison diagram of calculation results of misalignments at different position points between conventional spokes and special-shaped spokes designed in the present disclosure;
FIG. 20 is a schematic diagram of a contact situation of a tooth surface with a small misalignment;
FIG. 21 is a schematic diagram of a contact situation of a tooth surface with a large misalignment; and
FIG. 22 is a comparison diagram of transmission errors between a conventional spoke and a special-shaped spoke designed in the present disclosure.

In the drawings:
drive motor 100;
differential 200; half-shaft gear 2;
decoupling device 300; decoupling motor 3; rotating member 4; first end 41; second end 42; moving member 5; third end 51; fourth end 52; fitting portion 6; synchronizer 61; housing 8; fitting groove 81;
wheel end half-shaft 400; left wheel end half-shaft 401; right wheel end half-shaft 402;
reducer 500; gear 7; rim 71; spoke 72; first web 721; second web 722; central portion 73; meshing tooth 74;
electric drive control 600.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the descriptions. The embodiments described below with reference to the accompanying drawings are exemplary and used only for explaining the present disclosure, and should not be construed as a limitation on the present disclosure.

In the descriptions of the present disclosure, it should be understood that orientation or position relationships indicated by terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of description of the present disclosure, rather than indicating or implying that a specified device or component needs to have a specific orientation or be constructed and operated in a specific orientation. Therefore, this should not be construed as a limitation on the present disclosure.

In the descriptions of the present disclosure, unless otherwise stated, "multiple" means two or more.

In the descriptions of the present disclosure, it should be noted that unless otherwise explicitly specified or defined, the terms such as "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present disclosure according to specific situations.

When a vehicle is in a coasting condition, that is, when the vehicle travels continuously due to inertia of the vehicle or downhill potential energy, a drive motor does not output power, so that energy saving can be achieved. In this case, wheels actively move, and the drive motor is forcibly dragged by the wheels to rotate, resulting in loud noise to affect driving experience of the vehicle.

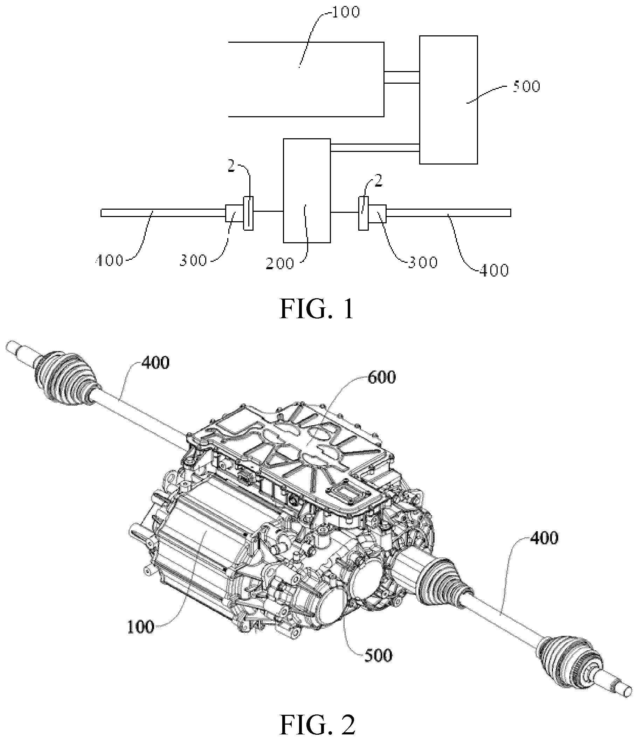

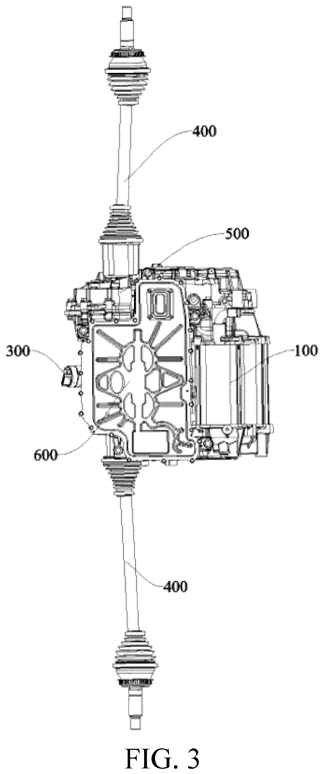

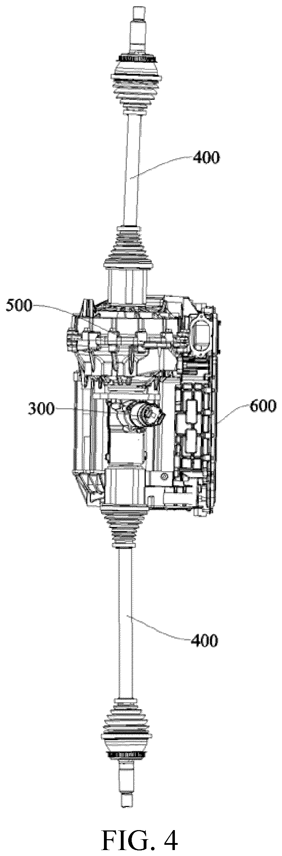

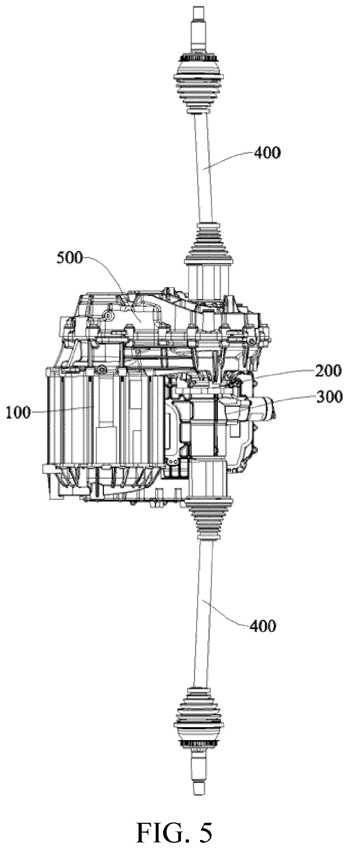

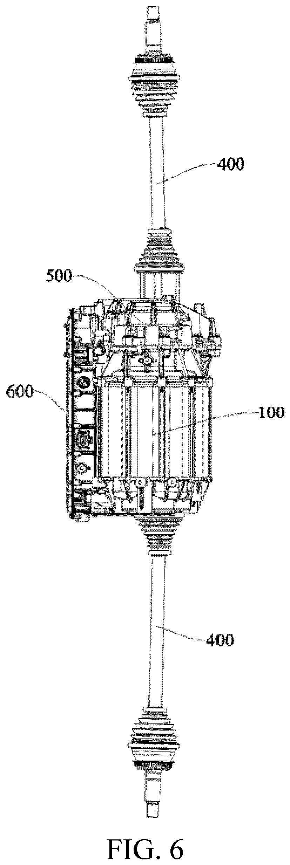

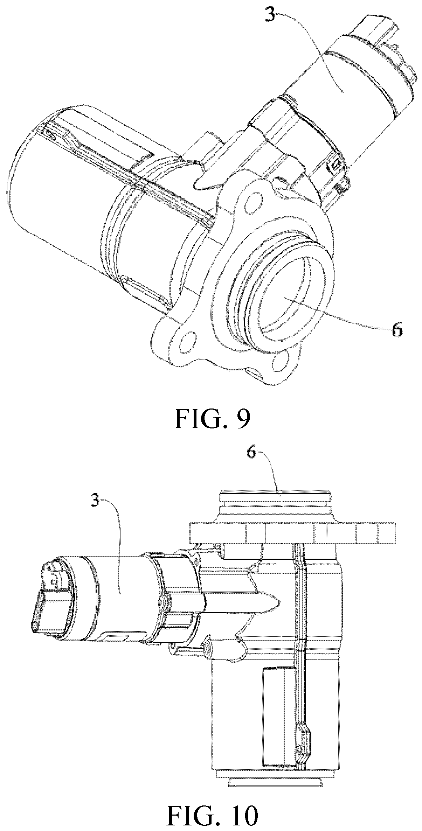

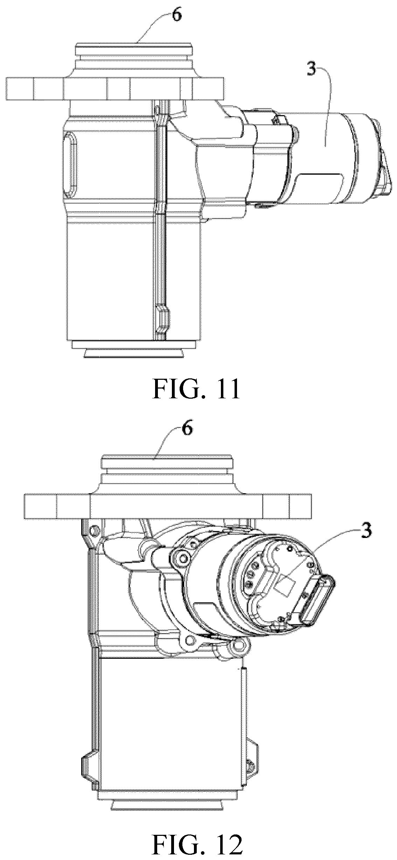

A decoupling device 300 according to embodiments of the present disclosure is described below with reference to FIG. 1 to FIG. 19. It may be understood that the decoupling device 300 in the present disclosure is used between a drive motor and a vehicle. FIG. 1 to FIG. 7 are accompanying drawings that describe an electric drive assembly using the decoupling device 300 in the present disclosure. Refer to these accompanying drawings for ease of description and understanding of the decoupling device 300 in the present disclosure.

According to embodiments of the present disclosure, the decoupling device 300 is mounted between a drive motor 100 and a wheel of a vehicle. The decoupling device 300 includes: a decoupling motor 3, a rotating member 4, and a moving member 5. The rotating member 4 is connected to the decoupling motor 3 and is rotatable under driving of the decoupling motor 3. The moving member 5 is connected to the rotating member 4. Rotation of the rotating member 4 may drive the moving member 5 to move. The moving member 5 is provided with a first side and a second side on which the drive motor 100 and the wheel are respectively arranged. The decoupling device 300 is configured to have a decoupling state in which the moving member 5 moves to separate the drive motor 100 from the wheel and a coupling state in which the moving member 5 is combined with the drive motor 100 and the wheel to achieve torque transmission.

The decoupling device 300 in the present disclosure is used in the vehicle. The drive motor 100 is a power member and outputs power. The power is transmitted to the wheel by using transmission members such as a differential 200, to drive the vehicle to travel.

When the vehicle is in a coasting condition, the wheel actively moves, multiple transmission members receive torque from the wheel, and the multiple transmission members transmit the torque, to forcibly drag a motor shaft of the drive motor 100 to rotate.

The decoupling device 300 is configured to have the decoupling state in which the decoupling device 300 allows the drive motor 10 to be separated from the wheel and the coupling state in which the decoupling device 300 allows the drive motor 100 to be combined with the wheel to achieve torque transmission.

The decoupling motor 3 generates driving force. The rotating member 4 and the moving member 5 are transmission members. The moving member 5 has a first side fitted to the drive motor, and the moving member 5 further has a second side fitted to the wheel. The moving member 5 moves to switch between the decoupling state and the coupling state.

The rotating member 4 and the moving member 5 can transmit power, and can further transition from rotational movement to linear movement, to stably drive a fitting portion 6 to move linearly. A fitting form of the rotating member 4 and the moving member 5 may be gear and rack fitting, nut and screw fitting, or the like. This is not specifically limited herein.

The decoupling device 300 has the decoupling state and the coupling state. When the decoupling device 300 is in the coupling state, the decoupling device 300 is separately combined with the drive motor 100 and the wheel, and power is normally transmitted from the decoupling device 300 and the drive motor 100 to the wheel, so that the vehicle can be driven to travel. When the decoupling device 300 is in the decoupling state, the decoupling device 300 may be separated from one of the drive motor 100 and the wheel. When the decoupling device 300 is in the decoupling state, the decoupling device 300 may be separated from the drive motor 100 and combined with the wheel. When the decoupling device 300 is in the decoupling state, the decoupling device 300 may alternatively be combined with the drive motor 100 and separated from the wheel.

When the decoupling device 300 is in the decoupling state, the drive motor 100 is separated from the wheel, the drive motor 100 cannot transmit torque to the wheel, and the wheel cannot transmit torque to the drive motor 100 either. The drive motor 100 and the wheel move independently of each other.

When the vehicle using the electric drive assembly in the present disclosure is in the coasting condition, the decoupling device 300 is set to the decoupling state, and the decoupling device 300 separates the drive motor 100 from the wheel, so that the wheel actively moves and cannot drive the drive motor 100 to rotate. When the vehicle is in the coasting condition, the drive motor 100 is not in operation, the motor does not drive the transmission members to rotate, and the wheel does not drive the drive motor 100 to rotate either, so that the drive motor 100 and the multiple transmission members do not rotate, so as to reduce vibration noise of the electric drive assembly, thereby improving the NVM performance of the vehicle.

The decoupling device 300 is set to the coupling state, and the decoupling device 300 is separately combined with the drive motor 100 and the wheel, so that torque of the drive motor 100 is transmitted to the wheel, and the vehicle may travel normally.

In addition, when a conventional vehicle is in the coasting condition, a wheel drives a transmission member and a drive motor to rotate, the drive motor is dragged to rotate, and a magnetic flux in a magnetic circuit changes accordingly. This does not affect a non-closed circuit, but affects an iron core and a magnate yoke in the magnetic circuit, resulting in hysteresis losses and eddy current losses in these ferro-magnetic materials. If a current flows in a closed circuit, heat is generated according to a quadratic relationship of the current. In other words, although the drive motor does not drive the wheel, during coasting, the drive motor may generate energy losses, and these energy losses are reflected in the wheel as braking force. The drive motor and the transmission members also consume power of the wheel and exert a braking effect on the wheel. As a result, energy consumption during wheel movement is increased, a coasting distance of the vehicle is reduced, and energy savings of the drive motor is low. However, when the vehicle using the electric drive assembly in the present disclosure is in the coasting condition, the decoupling device 300 is set to the decoupling state, and the multiple transmission members do not exert a braking effect on the wheel, so that energy consumption during wheel rotation is reduced, a coasting distance of the vehicle is increased, and an energy-saving effect of the drive motor 100 is improved. **In** addition, counter electromotive force of the drive motor 100 may also be reduced, to further reduce energy consumption of the drive motor 100.

When a vehicle using the decoupling device 100 in the present disclosure is in the coasting condition, the decoupling device 300 is set to the decoupling state, so that the drive motor 100 and the multiple transmission members are not in operation, to mitigate wear due to rotation of the drive motor 100 and wear due to meshing of the transmission members, so as to extend service lives of the drive motor 100 and the multiple transmission members.

According to embodiments of the present application, when the decoupling device 300 is in the coupling state, the vehicle travels in a normal traveling condition. When the vehicle is in the coasting condition, the decoupling device 300 is set to the decoupling state, and the decoupling device 300 separates the drive motor 100 from the wheel 400, so that the drive motor 100 and the multiple transmission members are not in operation to reduce vibration noise, thereby improving the NVM performance of the vehicle. **In** addition, wear of the drive motor 100 and the transmission members can be mitigated, to extend a service life of the electric drive assembly. Energy consumption of wheel rotation during vehicle coasting may be further reduced, counter electromotive force of the drive motor 100 is reduced, an energy-saving effect of the drive motor 100 is improved, and energy consumption of the drive motor 100 is reduced.

In some embodiments of the present disclosure, the rotating member 4 is provided with a first end 41 and a second end 42 that are connected. The first end 41 is connected to a decoupling motor 3, and the second end 42 rotates around the first end 41 under the driving of the decoupling motor 3. The moving member 5 is provided with a third end 51 and a fourth end 52 that are connected. The third end 51 is connected to the second end 42 of the rotating member, and the fourth end 52 is provided with a first side and a second side on which the drive motor 100 and the wheel are respectively arranged. In the decoupling state, the second end 42 and the third end 51 rotate around the first end 41 to drive the fourth end 52 to move.

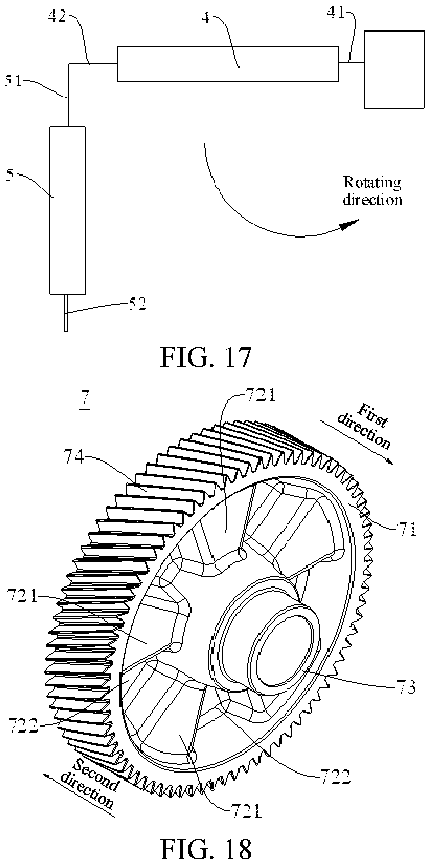

As shown in FIG. 17, the rotating member 4 rotates by using the first end 41 as a rotation axis, and the moving member 5 connected to the rotating member 4 is driven by the rotating member 4 to move. The fourth end 52 of the moving member 5 has a first side fitted to the drive motor 100, and the fourth end 52 further has a second side fitted to the wheel. The moving member 5 moves under driving of the rotating member 4 to switch between the decoupling state and the coupling state.

In some embodiments of the present disclosure, a connection between the third end 51 of the moving member 5 and the second end 42 of the rotating member 4 is in a folded-line structure, so that the moving member 5 can move linearly.

In some specific embodiments of the present disclosure, as shown in FIG. 17, the rotation axis of the rotating member 4 is parallel to a rotation axis of the decoupling motor 3, and a moving direction of the moving member 5 is perpendicular to the rotation axis of the decoupling motor 3.

The first end 41 is connected to the decoupling motor 3, so that the rotation axis of the rotating member 4 is the rotation axis of the decoupling motor 3. The connection between the third end 51 of the moving member 5 and the second end 42 of the rotating member 4 is in the folded-line structure, so that the moving member 5 moves perpendicularly relative to the rotation axis of the decoupling motor 3.

In some specific embodiments of the present disclosure, the connection between the third end 51 of the moving member 5 and the second end 42 of the rotating member 4 is in the folded-line structure, and an angle of the folded-line structure is 90 degrees.

In some specific embodiments of the present disclosure, the first side of the fourth end 52 of the moving member 5 is fixedly connected to the drive motor 100, and the second side of the fourth end 52 of the moving member 5 is selectively connected to the wheel. The moving member 5 moves to enable the second side of the fourth end 52 of the moving member 5 to be separated from or combined with the wheel.

In some embodiments of the present disclosure, the decoupling device 300 further includes a fitting portion 6. The fitting portion 6 is fixed to the fourth end 52 of the moving member 5 and is provided with a first side surface and a second side surface. The first side surface is configured to enable the first side of the fourth end 52 to be fixedly connected to the drive motor 100, and the second side surface is configured to enable the second side of the fourth end 52 to be detachably connected to the wheel. The second side surface of the fitting portion 6 is separated from the wheel in the decoupling state, and the second side surface of the fitting portion 6 is combined with the wheel in the coupling state.

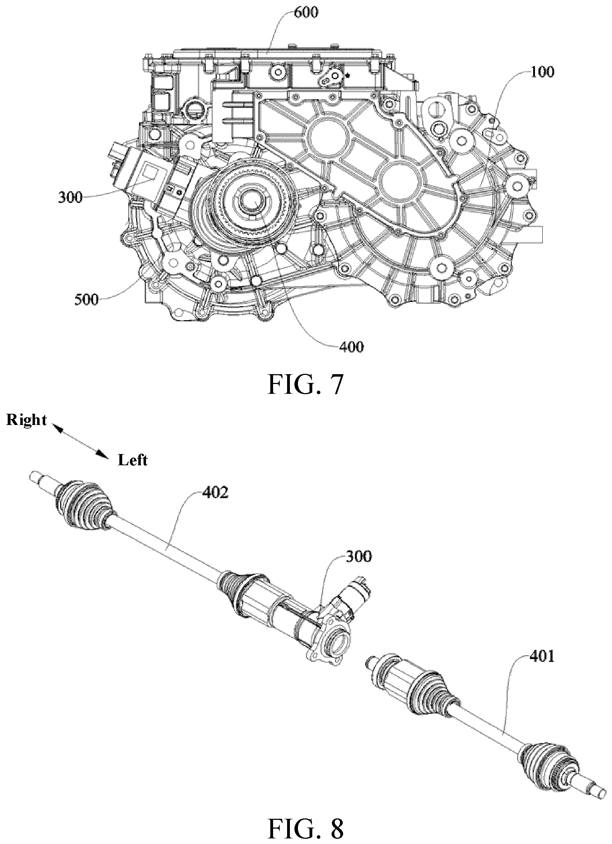

As shown in FIG. 8, the decoupling device 300 further includes a fitting portion 6. The fitting portion 6 is connected to the moving member 5, so as to be driven by the moving member 5 to move. The fitting portion 6 is a main operating member of the decoupling device 300. The fitting portion 6 is fixedly connected to the drive motor 100 and is separated from the wheel in the decoupling state, and the fitting portion 6 is fixedly connected to the drive motor 100 and is connected to the wheel in the coupling state. The fitting portion 6 may moves under driving of the moving member 5 to switch between the decoupling state and the coupling state.

The fitting portion 6 is provided with a first side surface and a second side surface. The first side surface of the fitting portion 6 is configured to be fixedly connected to the drive motor 100, and the second side surface of the fitting portion 6 is configured to be detachably connected to the wheel. The first side surface of the fitting portion 6 is fixedly connected to the drive motor 100 under driving of the first side of the fourth end 52 of the moving member 5, and the second side surface of the fitting portion 6 may be selectively connected to the wheel under driving of the second side of the fourth end 52 of the moving member 5.

In some embodiments of the present disclosure, the fitting portion 6 is provided with an inner ring gear, and a wheel end half-shaft 400 is provided with a meshing gear fitted to the inner ring gear. The inner ring gear is sleeved on and meshed with the meshing gear in the coupling state, and the inner ring gear is separated from the meshing gear in the decoupling state.

In some embodiments of the present disclosure, the fourth end 52 of the moving member 5 includes a fixing claw, the fitting portion 6 includes a main body that is in an interference fit with the fixing claw, and the main body is provided with the first side surface and the second side surface. The main body is configured to be fixedly connected to the drive motor 100, and is detachably connected to the wheel.

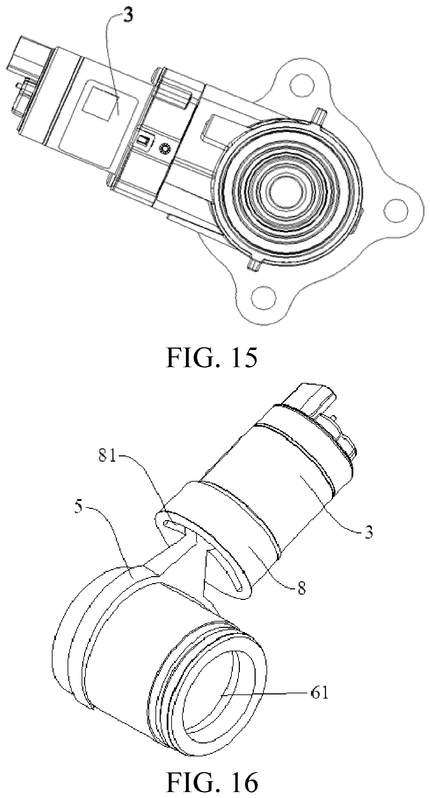

In some specific embodiments of the present disclosure, as shown in FIG. 16, the moving member 5 is a fork, and a fork leg of the fork is in an interference fit with the main body.

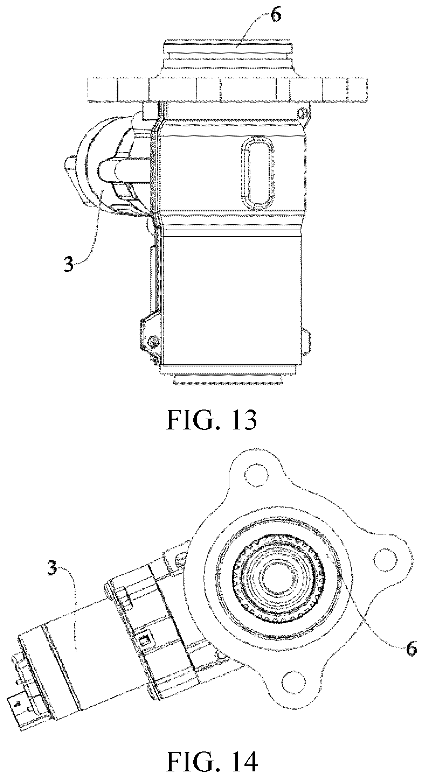

In some specific embodiments of the present disclosure, as shown in FIG. 14 and FIG. 15, the wheel includes a wheel end half-shaft 400 connected to the wheel. The second side surface of the fitting portion 6 is provided with an inner ring gear. The wheel end half-shaft 400 is provided with a meshing gear. The inner ring gear is sleeved on and meshed with the meshing gear in the coupling state, and the inner ring gear is separated from the meshing gear in the decoupling state. A position of the wheel end half-shaft 400 is fixed relative to the electric drive assembly, and the inner ring gear moves toward the wheel end half-shaft 400 under the driving of the moving member 5. The inner ring gear is sleeved on and meshed with the meshing gear, so that the decoupling device 300 is in the coupling state, and the decoupling device 300 is separately combined with the drive motor 100 and the wheel end half-shaft 400. When the decoupling device 300 is in the coupling state, the inner ring gear moves away from the wheel end half-shaft 400 under the driving of the moving member 5, and the inner ring gear is separated from the meshing gear, so that the decoupling device 300 is switched from the coupling state to the decoupling state in which the decoupling device 300 is combined with the drive motor 100 and is separated from the wheel end half-shaft 400, to separate a half-shaft gear 2 from the wheel end half-shaft 400.

When the decoupling device 300 is in the decoupling state, the fitting portion 6 is separated from the wheel end half-shaft 400. When the decoupling device 300 is in the coupling state, the fitting portion 6 is combined with the wheel end half-shaft 400. A combining manner of the fitting portion 6 and the wheel end half-shaft 400 needs to be convenient for switching between combination and separation. In some other embodiments of the present disclosure, the combining manner of the fitting portion 6 and the wheel end half-shaft 400 may be key-slot fitting, snap fitting, meshing fitting, or the like. Alternatively, the combining manner of the fitting portion 6 and the wheel end half-shaft 400 may be any combination of the foregoing fitting manners. This is not specifically limited herein.

In some other embodiments of the present disclosure, the fitting portion 6 is formed into an inner spline structure, and the wheel end half-shaft 400 is provided with an outer spline. The outer spline is meshed with the inner spline in the coupling state.

In some other embodiments of the present disclosure, the wheel end half-shaft 400 is provided with a groove, and the fitting portion 6 is formed with a protrusion. The protrusion and the groove are fitted to each other in the coupling state.

In some embodiments of the present disclosure, the drive motor 100 is connected to the decoupling device 300 via a differential 200. The differential 200 has a half-shaft gear 2 provided with a first spline. A second spline is provided on the first side surface of the fitting portion 6. The fitting portion 6 is spline-meshed with the half-shaft gear 2, so that the fitting portion 6 and the half-shaft gear 2 rotate synchronously.

The fitting portion 6 is fixedly connected to the half-shaft gear 2 of the differential 200. Power of the drive motor 100 is transmitted to the half-shaft gear 2 by using multiple transmission members and the differential 200, and the half-shaft gear 2 rotates. The fitting portion 6 is fixedly connected to the half-shaft gear 2 of the differential 200, and the half-shaft gear 2 may drive the fitting portion 6 to rotate synchronously. When the decoupling device 300 is in the coupling state, the fitting portion 6 is meshed with the wheel end half-shaft 400, power is transmitted to the wheel, and the wheel rotates under driving of the drive motor 100. When the decoupling device 300 is in the decoupling state, the fitting portion 6 is separated from the wheel end half-shaft 400, and the drive motor and the wheel move independently of each other.

In some specific embodiments of the present disclosure, an inner spline is provided on the half-shaft gear 2, an outer spline is provided on the first side surface of the fitting portion 6, and the fitting portion 6 is spline-meshed with the half-shaft gear 2.

In some embodiments of the present disclosure, as shown in FIG. 16, the decoupling device further includes a housing 8 having an inner cavity, and a bottom surface of the housing 8 is provided with a fitting groove 81. A rotating member 42 is arranged in the inner cavity. A part of the moving member 5 extends from the fitting groove 81 into the inner cavity to be connected to the rotating member 4, so that when the rotating member 4 rotates, the moving member 5 is driven to reciprocate along the fitting groove 81.

Optionally, the fitting groove 81 may be an arc-shaped groove. A part of the moving member 5 extends into the fitting groove 81. When the rotating member 4 rotates, the moving member 5 moves along an extension track of the fitting groove 81. Because the rotating member 4 performs rotational movement, the fitting groove 81 on the rotating member 4 also performs the rotational movement. When the moving member 5 moves along the track of the fitting groove 81, the moving member 5 is driven to move linearly.

In some specific implementations of the present disclosure, as shown in FIG. 16, one end of the rotating member 4 is connected to a motor shaft of the decoupling motor 3, and the rotating member 4 is driven by the decoupling motor 3 to rotate. A fitting groove 81 is provided at another end of the rotating member 4, and the fitting groove 81 is configured as an arc-shaped groove. The moving member 5 is configured as a fork. A circular boss is provided at a fork head of the fork. The circular boss is snapped with the arc-shaped groove, and the circular boss may move along an extension track of the arc-shaped groove. A fork leg of the fork is connected to the fitting portion 6. When the rotating member 4 rotates, the fork that is fitted to the fitting groove 81 moves along an extension track of the fitting groove 81, so that the fork drives the fitting portion 6 to move linearly, to enable the inner ring gear to be meshed with or separated from the meshing gear.

A structure and an operating process of a specific embodiment of a decoupling device 300 in the present disclosure are described in detail below with reference to FIG. 1 to FIG. 17.

The decoupling device 300 is arranged between a half-shaft gear 2 and a corresponding wheel end half-shaft 400. The decoupling device 300 has a decoupling state and a coupling state. When the decoupling device 300 is in the coupling state, the decoupling device 300 is separately combined with the half-shaft gear 2 and the wheel end half-shaft 400. When the decoupling device 300 is in the decoupling state, the decoupling device 300 is combined with the half-shaft gear 2 and separated from the wheel end half-shaft 400.

The decoupling device 300 includes: a decoupling motor 3, a rotating member 4, a fork, and a fitting portion 6. One end of the rotating member 4 is connected to a motor shaft of the decoupling motor 3. The decoupling motor 3 generates driving force, and the decoupling motor 3 drives the rotating member 4 to rotate. A fitting groove 81 is provided at another end of the rotating member 4, and the fitting groove 81 is configured as an arc-shaped groove. A circular boss is provided at a fork head of the fork. The circular boss is snapped with the arc-shaped groove, and the circular boss may move along an extension track of the arc-shaped groove. A fork leg of the fork is connected to the fitting portion 6. When the rotating member 4 rotates, the fork that is fitted to the fitting groove 81 moves along an extension track of the fitting groove 81. Because the rotating member 4 performs rotational movement, the fitting groove 81 on the rotating member 4 also performs the rotational movement. When the fork moves along the track of the fitting groove 81, the fork is driven to move linearly. The fitting portion 6 includes a synchronizer 61. An inner ring gear is formed in the synchronizer 61. The wheel end half-shaft 400 is provided with a meshing gear. The inner ring gear is sleeved on and meshed with the meshing gear in the coupling state.

When a vehicle is in a normal traveling condition, the decoupling device 300 is in the coupling state. The decoupling device 300 is combined with the half-shaft gear 2, an inner ring gear mechanism is sleeved on the meshing gear, and the decoupling device 300 is further combined with the wheel end half-shaft 400. The decoupling device 300 connects the half-shaft gear 2 to the wheel end half-shaft 400, and torque of the drive motor 100 is transmitted to the wheel, so that the vehicle travels normally.

When the vehicle is in a coasting condition, the drive motor 100 does not output power. The decoupling device 300 is switched from the coupling state to the decoupling state. In this case, the decoupling motor 3 is started. The decoupling motor 3 drives the rotating member 4 to rotate, and the rotating member 4 drives the fork to move linearly. The fork is connected to the fitting portion 6. The fork drives the fitting portion 6 to move away from the wheel end half-shaft 400, and the inner ring gear mechanism is separated from the meshing gear, so that the decoupling device 300 separates the half-shaft gear 2 from the wheel end half-shaft 400, and the decoupling motor 3 stops operating. In this case, the decoupling device 300 is in the decoupling state, the wheel can transmit only torque to the wheel end half-shaft 400, and the wheel cannot drive the drive motor 100 to rotate. The drive motor 100 is not in operation, the motor does not drive multiple transmission members such as the half-shaft gear 2 to rotate, and the wheel does not drive the drive motor 100 to rotate either, so that the drive motor 100 and the transmission members such as a differential 200 are not in operation, to reduce vibration noise of an electric drive assembly, thereby improving the NVM performance of the vehicle.

When the vehicle is switched from the coasting condition to the normal traveling condition, the decoupling device 300 is switched from the decoupling state to the coupling state. In this case, the decoupling motor 3 is started. The decoupling motor 3 drives the rotating member 4 to rotate, and the rotating member 4 drives the fork to move linearly. The fork drives the fitting portion 6 to move toward the wheel end half-shaft 400, and the inner ring gear mechanism is sleeved on the meshing gear, so that the decoupling device 300 is combined with the wheel end half-shaft 400, and the decoupling motor 3 stops operating. In this case, the decoupling device 300 is in the coupling state, and the decoupling device 300 connects the half-shaft gear 2 and the wheel end half-shaft 400.

According to embodiments of the present disclosure, an electric drive assembly includes the decoupling device 300 according to any one of the foregoing embodiments.

In some embodiments, the electric drive assembly further includes: a drive motor 100 and a differential 200. The differential 200 is connected to the drive motor 100. The differential 200 includes a half-shaft gear 2. The half-shaft gear 2 is connected to a wheel end half-shaft 400. The half-shaft gear 2 may rotate under driving force of the drive motor 100. The decoupling device 300 is arranged between the half-shaft gear 2 and the corresponding wheel end half-shaft 400, and the wheel end half-shaft 400 is configured to mount a wheel.

In some embodiments, the differential 200 further includes a differential housing, the drive motor 100 is fitted to the differential housing to drive the differential housing to rotate, and the differential housing is fitted to the half-shaft gear 2 to drive the half-shaft gear 2 to rotate.

The electric drive assembly in the present disclosure is used in a vehicle. The drive motor 100 is a power member and outputs power. The power is transmitted to the wheel by using transmission members such as the differential 200, to drive the vehicle to travel.

When the vehicle is in a normal traveling condition, power from the drive motor 100 enters the differential 200. The differential 200 drives two half-shaft gears 2 to rotate through rotation of the differential housing and meshing of internal planet gears, and the power is transmitted to the two half-shaft gears 2. The two half-shaft gears 2 are respectively connected to two wheel end half-shafts 400, and the two wheel end half-shafts 400 are respectively connected to wheels on two sides of the vehicle. The power is transmitted to the wheels through the wheel end half-shafts 400, to drive the vehicle to move.

When the vehicle is in a coasting condition, the wheels actively move, and drive the wheel end half-shafts to rotate. Multiple transmission members connected to the wheel end half-shafts receive torque from the wheels, and the multiple transmission members such as the wheel end half-shafts and the half-shaft gears transmit the torque, to forcibly drag a motor shaft of the drive motor 100 to rotate.

The electric drive assembly in the present disclosure further includes a decoupling device 300. The decoupling device 300 is arranged between at least one half-shaft gear 2 and a corresponding wheel end half-shaft 400. The decoupling device 300 is configured to have a decoupling state and a coupling state. In the decoupling state, the decoupling device 300 is separated from one of the half-shaft gear 2 and the wheel end half-shaft 400. In the coupling state, the decoupling device 300 is separately combined with the half-shaft gear 2 and the wheel end half-shaft 400 to achieve torque transmission.

The decoupling device 300 has the decoupling state and the coupling state. When the decoupling device 300 is in the coupling state, the decoupling device 300 is separately combined with the half-shaft gear 2 and the wheel end half-shaft 400. When power is transmitted from the half-shaft gear 2 through the decoupling device 300, the power may be normally transmitted to the wheel end half-shaft 400. The wheel end half-shaft 400 and the half-shaft gear 2 rotate synchronously, and the wheel end half-shaft 400 transmits the power to a wheel, so that a vehicle can be driven to travel.

When the decoupling device 300 is in the decoupling state, the decoupling device 300 may be separated from one of the half-shaft gear 2 and the wheel end half-shaft 400. When the decoupling device 300 is in the decoupling state, the decoupling device 300 may be separated from the half-shaft gear 2 and combined with the wheel end half-shaft 400. When the decoupling device 300 is in the decoupling state, the decoupling device 300 may alternatively be combined with the half-shaft gear 2 and separated from the wheel end half-shaft 400.

When the decoupling device 300 is separated from the half-shaft gear 2, and the decoupling device 300 is combined with the wheel end half-shaft 400, the half-shaft gear 2 is separated from the wheel end half-shaft 400, and the wheel end half-shaft 400 cannot receive torque from the half-shaft gear 2, so that the wheel end half-shaft 400 and the half-shaft gear 2 move independently of each other. When the decoupling device 300 is separated from the wheel end half-shaft 400 and combined with the half-shaft gear 2, the half-shaft gear 2 is separated from the wheel end half-shaft 400, and the wheel end half-shaft 400 cannot receive torque from the half-shaft gear 2, so that the wheel end half-shaft 400 and the half-shaft gear 2 move independently of each other.

When the decoupling device 300 is in the decoupling state, the half-shaft gear 2 is separated from the wheel end half-shaft 400, the half-shaft gear 2 cannot transmit torque to the wheel end half-shaft 400, and the wheel end half-shaft 400 cannot transmit torque to the half-shaft gear 2 either, so that the half-shaft gear 2 and the wheel end half-shaft 400 move independently of each other.

When a vehicle using the electric drive assembly in the present disclosure is in a coasting condition, the decoupling device 300 is set to the decoupling state, and the decoupling device 300 separates the wheel end half-shaft 400 from the half-shaft gear 2, so that the wheel actively moves and can transmit torque only to the wheel end half-shaft 400, but the wheel cannot drive the drive motor 100 to rotate. When the vehicle is in the coasting condition, the drive motor 100 is not in operation, the motor does not drive the multiple transmission members such as the half-shaft gear 2 to rotate, and the wheel does not drive the drive motor 100 to rotate either, so that the drive motor 100 and the transmission members such as the differential 200 do not rotate, to reduce vibration noise of the electric drive assembly, thereby improving the NVM performance of the vehicle.

In some embodiments, the differential device 300 includes two half-shaft gears 2, inner splines are provided on the half-shaft gears 2. A fitting portion of the decoupling device 300 has outer splines, and the fitting portion 6 keeps being spline-meshed with the half-shaft gears 2, so that the fitting portion 6 and the half-shaft gears 2 rotate synchronously.

When the vehicle using the electric drive assembly in the present disclosure is in the coasting condition, the decoupling device 300 is set to the decoupling state, and the drive motor 100 and the transmission members such as the differential 200 are not in operation, so that wear due to rotation of the drive motor 100 and wear due to meshing of the transmission members can be mitigated, so as to extend service lives of the drive motor 100 and the transmission members such as the differential 200.

According to the electric drive assembly in the present disclosure, decoupling devices 300 may be respectively arranged between two half-shaft gears 2 and wheel end half-shafts 400 corresponding to the half-shaft gears 2. When the vehicle is in the coasting condition, the two decoupling devices 300 are both set to the decoupling state, and the two half-shaft gears 2 are respectively separated from the corresponding wheel end half-shafts 400, so that the wheels on two sides rotate independently, the wheels do not drive a drive motor 100 to rotate either, and the drive motor 100 and transmission members such as the differential 200 are not in operation to reduce vibration noise.

The electric drive assembly in the present disclosure may further include a decoupling device 300 arranged between a half-shaft gear 2 and a corresponding wheel end half-shaft 400. As shown in FIG. 8, for example, a decoupling device 300 is arranged between a right half-shaft gear and a right wheel end half-shaft 402, no decoupling device 300 is arranged between a left half-shaft gear and a left wheel end half-shaft 401, and the left half-shaft gear is directly combined with the left wheel end half-shaft 401. When the vehicle is in the coasting condition, the decoupling device 300 is set to the decoupling state, the right half-shaft gear is separated from the right wheel end half-shaft 402, the right wheel end half-shaft 402 rotates driven by a wheel, and the right half-shaft gear is not driven by the right wheel end half-shaft 402. However, because the left half-shaft gear is combined with the left wheel end half-shaft 401, and the left half-shaft gear is driven by the left wheel end half-shaft 401 to rotate, under self-rotation of planet gears in a differential 200, torque of the left half-shaft gear is transmitted to the right half-shaft gear and transmission ends. The planet gears in the differential 200 do not revolve, a differential housing does not rotate either, and the wheel does not drive the drive motor 100 to rotate, so that the drive motor 100 and the transmission members such as the differential 200 are not in operation to reduce vibration noise. Therefore, the decoupling device 300 is arranged between the half-shaft gear 2 and the corresponding wheel end half-shaft 400 to also implement that the drive motor 100 and the transmission members such as the differential 200 are not in operation, to reduce vibration noise, so that the NVM performance of the vehicle is improved. In addition, in comparison to arranging decoupling devices 300 between two half-shaft gears 2 and wheel end half-shafts 400 corresponding to the half-shaft gears 2, manufacturing costs may be further reduced.

In some embodiments of the present disclosure, the electric drive assembly further includes a reducer 500. The reducer 500 transmits power from the drive motor 100 to the differential 200. The reducer 500 includes multiple gears. The multiple gears include an input gear and an output gear. The input gear is connected to the drive motor 100, and the output gear is connected to the differential housing.

In some embodiments of the present disclosure, as shown in FIG. 18, at least one of the multiple gears in the reducer 500 includes: a rim, a central portion, and a spoke. An outer peripheral wall of the rim is provided with meshing teeth arranged in a peripheral direction of the rim. The central portion is located at a radially inner side of the rim 71. The spoke 72 is connected between the rim 71 and the central portion 73. In a peripheral direction of the gear 7, the spoke 72 includes multiple first webs 721 and multiple second webs 722 that are arranged in a staggered manner. The first webs 721 protrude in a first direction, and the second webs 722 protrude in a second direction. The first direction and the second direction are parallel to an axial direction of the gear 7 and are opposite to each other.

Specifically, the central portion 73 and the spoke 72 of the gear 7 are connected to each other, and the spoke 72 connects the central portion 73 to the circular rim 71 of the gear 7. The spoke 72 has the first web plates 721 protruding in the first direction and the second webs 722 protruding in the second direction. The spoke 72 may support the rim 71 in the first direction and the second direction, and has a larger supporting area for the rim 71. In a process of meshing of two gears 7, the first webs 721 and the second webs 722 of the spoke 72 support the rim 71, so that a contact region of two meshing teeth 74 that are meshed with each other is closer to a center of a tooth surface, to better maintain a meshing degree of the gears 7. This reduces meshing misalignments of the gears 7, ensures smoother meshing of the gears 7, so that transmission error excitation during the meshing of the gears 7 is reduced.

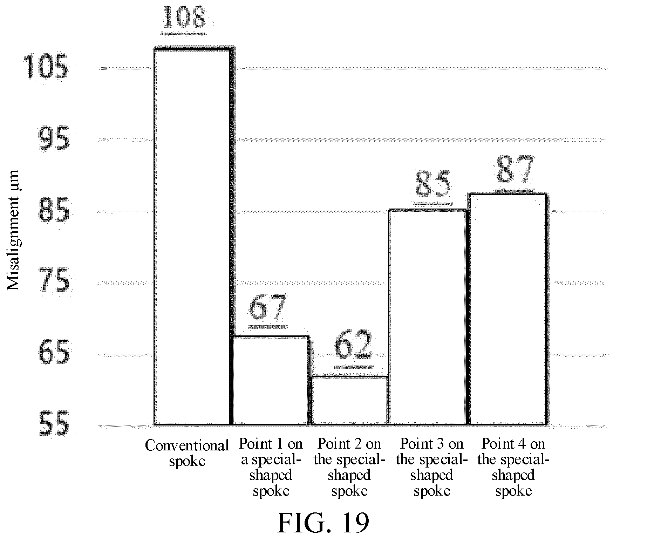

Because when the gear 7 transmits large torque, axial force is also large, it can be learned from a formula F=KX that when the gear 7 bears a specific amount of force, deformation of the gear 7 is negatively correlated to stiffness. Compared to a conventional spoke whose webs are distributed at a center of a tooth width, the spoke of the gear 7 in the present disclosure has the first webs 721 and the second webs 722 distributed in an entire tooth width direction of the meshing teeth 74, so that axial bending stiffness of a special-shaped spoke in the present disclosure is significantly higher than that of the conventional spoke. Effect verification is performed on the conventional spoke and the special-shaped spoke by using finite element software. Four points are taken at extreme positions of a support structure of the special-shaped spoke: A point 1 is a middle position of the first web 721, a point 2 is a connection position of the first web 721 and the second web 722, a point 3 is a middle position of the second web 722, and a point 4 is a connection position of the second web 722 and the first web 721. Simulation verification is performed on the four points, to obtain a meshing misalignment of the gear 7. In the same condition, a gear meshing misalignment corresponding to the conventional spoke is calculated. As shown in FIG. 19, a misalignment improvement effect of the special-shaped spoke relative to the conventional spoke may range from 19.4% to 42.6%, demonstrating a significant improvement effect.

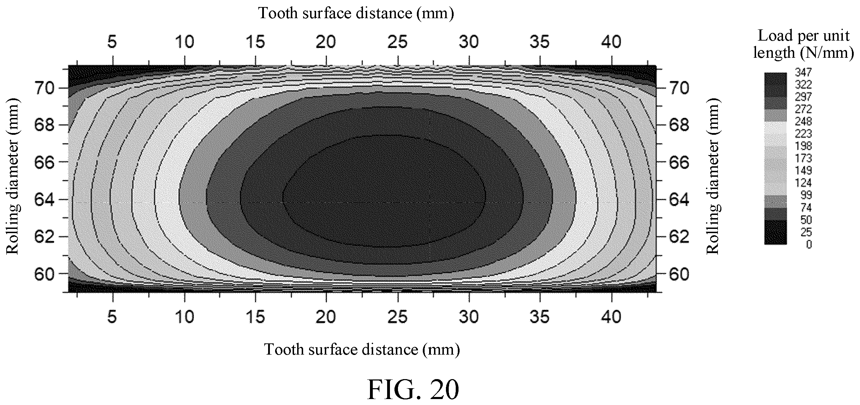

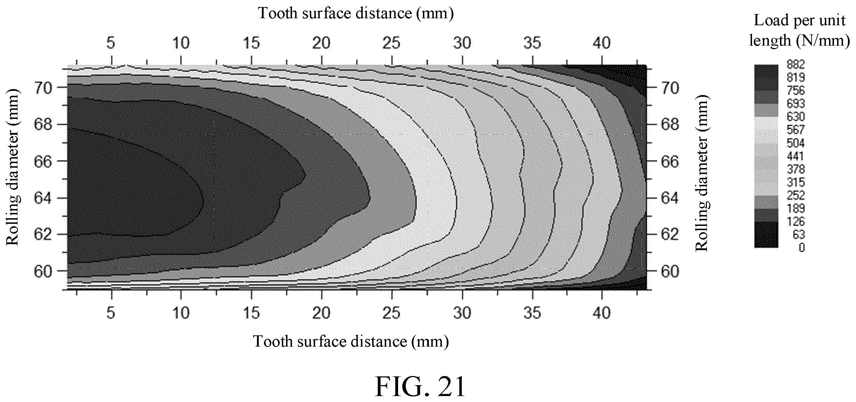

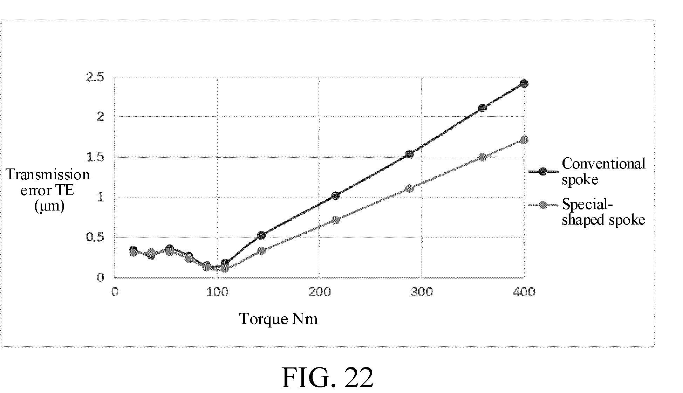

The special-shaped spoke in the present disclosure can reduce a transmission error of the gear 7. Because the special-shaped spoke has large axial stiffness, the meshing misalignment of the gear 7 can be effectively reduced as verified through calculation. A smaller meshing misalignment indicates a lower risk that meshing teeth 111 are offset to one side when a gear system is loaded. FIG. 20 and FIG. 21 show contact situations of tooth surfaces with different misalignments. Within a full-torque condition interval, a small misalignment variation range causes contact between the meshing teeth 111 to be closer to the center of the tooth surface, so that a difference between an actual meshing position and a theoretical meshing position of the gear 7 is smaller. This leads to a lower transmission error of the gear 7 and smaller dynamic meshing force generated by the meshing of the gear 7. In a same parameter boundary, FIG. 22 shows a comparison of transmission errors between the conventional spoke and the special-shaped spoke. It can be learned that in medium-large and large torque conditions above 100 Nm, a transmission error of the special-shaped spoke is significantly lower than that of the conventional spoke, and an optimization range of the transmission error may reach 28.9%. In addition, a lower transmission error corresponds to a smaller fluctuation of gear meshing force, and plays a crucial role in reducing a gear beat frequency phenomenon. The special-shaped spoke may cover a change of an entire torque band, and adapt to a range of torque changes.

In some embodiments of the present disclosure, as shown in FIG. 2, the electric drive assembly further includes an electric drive control 600, and the electric drive control 600 is suitable for controlling operating of the electric drive assembly.

According to embodiments of the present disclosure, the vehicle includes the electric drive assembly according to any one of the foregoing embodiments.

According to the vehicle in embodiments of the present disclosure, the foregoing electric drive assembly is provided, so that traveling noise of the vehicle is low, and driving experience of the vehicle is improved.

Other components, such as the differential 200 and the reducer 500, and operations of the electric drive assembly according to embodiments of the present disclosure are known to a person of ordinary skill in the art, and details are not described herein.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although embodiments of the present disclosure have been shown and described, a person of ordinary skill in the art should understand that various changes, modifications, replacements, and variations may be made to the embodiments without departing from the principles and spirit of the present disclosure, and the scope of the present disclosure is as defined by the appended claims and equivalents thereof.

## Claims

1. A decoupling device (300), mounted between a drive motor (100) and a wheel of a vehicle, and comprising:
a decoupling motor (3);
a rotating member (4), connected to the decoupling motor (3) and rotatable under driving of the decoupling motor (3); and
a moving member (5), connected to the rotating member (4), rotation of the rotating member (4) driving the moving member (5) to move;
the moving member (5) being provided with a first side and a second side on which the drive motor (100) and the wheel are respectively arranged, and the decoupling device (300) being configured to have a decoupling state in which the moving member (5) moves to separate the drive motor (100) from the wheel and a coupling state in which the moving member (5) is combined with the drive motor (100) and the wheel to achieve torque transmission.

2. The decoupling device (300) according to claim 1, wherein the rotating member (4) is provided with a first end (41) and a second end (42) that are connected, the first end (41) is connected to the decoupling motor (3), and the second end (42) rotates around the first end (41) under the driving of the decoupling motor (3);
the moving member (5) is provided with a third end (51) and a fourth end (52) that are connected, the third end (51) is connected to the second end (42) of the rotating member (4), a connection between the third end (51) and the second end (42) is in a folded-line structure, and the fourth end (52) is provided with a first side and a second side on which the drive motor (100) and the wheel are respectively arranged; and
in the decoupling state, the second end (42) and the third end (51) rotate around the first end (41) to drive the fourth end (52) to move.

3. The decoupling device (300) according to claim 2, wherein a rotation axis of the rotating member (4) is parallel to a rotation axis of the decoupling motor (3), and a moving direction of the moving member (5) is perpendicular to the rotation axis of the decoupling motor (3).

4. The decoupling device (300) according to claim 3, wherein the first side of the fourth end (52) of the moving member (5) is fixedly connected to the drive motor (100), the second side of the fourth end (52) of the moving member (5) is selectively connected to the wheel, and the moving member (5) moves to enable the second side of the fourth end (52) of the moving member (5) to be separated from or fitted to the wheel.

5. The decoupling device (300) according to claim 4, further comprising: a fitting portion (6), fixed to the fourth end (52) of the moving member (5), and provided with a first side surface and a second side surface, the first side surface being configured to enable the first side of the fourth end (52) to be fixedly connected to the drive motor (100), the second side surface being configured to enable the second side of the fourth end (52) to be detachably connected to the wheel, the second side surface of the fitting portion (6) being separated from the wheel in the decoupling state, and the second side surface of the fitting portion (6) being combined with the wheel in the coupling state.

6. The decoupling device (300) according to claim 5, wherein the fourth end (52) of the moving member (5) comprises a fixing claw, the fitting portion (6) comprises a main body that is in an interference fit with the fixing claw, and the main body is provided with the first side surface and the second side surface.

7. The decoupling device (300) according to claim 5 or 6, wherein the wheel comprises a wheel end half-shaft (400) connected to the wheel, the second side surface of the fitting portion (6) is provided with an inner ring gear, the wheel end half-shaft (400) is provided with a meshing gear fitted to the inner ring gear, the inner ring gear is sleeved on and meshed with the meshing gear in the coupling state, and the inner ring gear is separated from the meshing gear in the decoupling state.

8. The decoupling device (300) according to any one of claims 5 to 7, wherein the drive motor (100) is connected to the decoupling device (300) via a differential (200), the differential (200) has a half-shaft gear (2) provided with a first spline, a second spline is provided on the first side surface of the fitting portion (6), and the fitting portion (6) is spline-meshed with the half-shaft gear (2), so that the fitting portion (6) and the half-shaft gear (2) rotate synchronously.

9. The decoupling device (300) according to any one of claims 1 to 8, further comprising a housing (8) having an inner cavity, a bottom surface of the housing (8) being provided with a fitting groove (81);
the rotating member (4) being arranged in the inner cavity, and a part of the moving member (5) extends from the fitting groove (81) into the inner cavity to be connected to the rotating member (4), so that when the rotating member (4) rotates, the moving member (5) is driven to reciprocate along the fitting groove (81).

10. The decoupling device (300) according to claim 9, wherein the fitting groove (81) is arc-shaped.

11. An electric drive assembly, arranged between a drive motor (100) and a wheel of a vehicle, and comprising the decoupling device (300) according to any one of claims 1 to 10.

12. The electric drive assembly according to claim 11, further comprising:
a drive motor (100); and
a differential (200), connected to the drive motor (100), and comprising a differential housing and a half-shaft gear (2), the drive motor (100) being fitted to the differential housing to drive the differential housing to rotate, the differential housing being fitted to the half-shaft gear (2) to drive the half-shaft gear (2) to rotate, and the half-shaft gear (2) being connected to a wheel end half-shaft (400);
the decoupling device (300) being arranged between the half-shaft gear (2) and the corresponding wheel end half-shaft (400), and the wheel end half-shaft (400) being configured to mount the wheel.

13. A vehicle, comprising the decoupling device (300) according to any one of claims 1 to 10 or the electric drive assembly according to claim 11 or 12.
